# EUROPÄISCHE PATENTSCHRIFT

(11) **EP 2 565 687 B1**
(45) Veröffentlichungstag und Bekanntmachung des Hinweises auf die Patenterteilung: **13.04.2016**
(21) Anmeldenummer: 12005332.7
(22) Anmeldetag: 20.07.2012
(51) Int. Cl.: G02B 6/00, B60Q 3/00, B60Q 3/02

(54) **Beleuchtungsvorrichtung zum Erzeugen eines Leuchtstreifens sowie Kraftwagen**
Lighting device to generate a lighting strip and motor vehicle
Dispositif d'éclairage destiné à générer un nuage lumineux ainsi que véhicule automobile

(30) Priorität: 02.09.2011 DE 102011112322
(43) Veröffentlichungstag der Anmeldung: 06.03.2013
(73) Patentinhaber: Audi AG, 85045 Ingolstadt (DE)
(72) Erfinder: Pfeil, Marcus, 90610 Winkelhaid (DE)
(74) Vertreter: Thielmann, Frank

(56) Entgegenhaltungen:
- EP-A2- 1 903 359
- DE-A1-102005 013 837
- DE-A1-102011 015 161
- US-A- 5 590 945
- US-A1- 2003 063 888
- US-A1- 2005 084 229
- US-B1- 6 854 869

## Beschreibung

Die Erfindung betrifft eine Beleuchtungsvorrichtung zum Erzeugen eines Leuchtstreifens entlang einer vorgegebenen Strecke an einem Bauteil sowie einen Kraftwagen, der von dieser Beleuchtungsvorrichtung wenigstens eine aufweist.

Um es einer Person zu ermöglichen, sich im Innenraum eines Kraftwagens auch im Dunkeln zu orientieren, kann vorgesehen sein, in einzelnen Funktionselementen, wie z.B. einem Becherhalter (Cupholder) oder einem Lautsprecher, mit einer Lichtquelle von innen heraus zu beleuchten. Die Person kann dann erkennen, wo sich das Funktionselement im Innenraum befindet, ohne dass der gesamte Innenraum hell erleuchtet sein muss. Die oben erwähnte Beleuchtungsvorrichtung ermöglicht es dabei, Licht einer Lichtquelle entlang einer Kontur des jeweiligen Funktionselements zu verteilen, so dass die Kontur im Dunkeln als leuchtender Streifen erkennbar ist. Typischerweise wird eine solche Beleuchtungsvorrichtung für eine umlaufende Beleuchtungen verwendet, d.h. der Leuchtstreifen weist hier die Form eines geschlossenen Bandes auf.

Zum Erzeugen eines umlaufenden Leuchtstreifens kann ein ringförmiger Lichtleiter aus Polymethylmethacrylat (PMMA, Plexiglas ®) verwendet werden, in den mittels zweier Leuchtdioden an zwei Enden Licht eingekoppelt wird. Der Lichtleiter weist hierbei die Form der darzustellenden Kontur auf und kann z.B. mittels einer Verrastung an dem Bauteil oder um dieses herum fixiert sein. Die Leuchtdioden können jeweils in einem Einkoppelelement eingebaut sein, in dem sich eine elektrische Schaltung zum Betreiben der Leuchtdiode befindet und durch welches das Licht der Leuchtdioden gebündelt und auf eine Einkoppelfläche des Lichtleiters gerichtet wird.

Entlang seiner Längserstreckung in Verlaufsrichtung der Kontur weist der Lichtleiter Streuzentren auf, also z.B. Einkerbungen an seiner Außenwandung oder reflektierende Partikel in seinem Inneren, durch welche jeweils ein Teil des Lichts umgelenkt wird und aus dem Lichtleiter austritt. Hierdurch verteilt sich das Licht der Leuchtdioden entlang der Strecke. Der Lichtleiter erscheint dadurch entlang der Kontur gleichmäßig hell. Mittels eines solchen Lichtleiters kann dabei typischerweise eine Fläche von bis zu 200 mm x 150 mm mit einem gleichmäßig hellen Leuchtstreifen umgeben werden.

Soll eine größere Fläche mit einem umlaufenden Leuchtstreifen umgeben werden, muss der Lichtleiter entsprechend lang sein. Hierbei ergibt sich das Problem, dass thermisch bedingte Längenänderungen des Lichtleiters in dessen Material eine mechanische Spannung verursachen können, die zu Haarrissen in dem Material oder sogar zur Zerstörung des Lichtleiters führen kann. Insbesondere bei einem Kraftwagen können sich in dessen Innenraum unter Umständen Temperaturen von -40 °C bis +80°C ergeben.

Die Druckschrift US 6,854,869 B1 befasst sich mit Bezügen für Fahrzeugsitze, die mit Beleuchtungseffekten versehen sind, welche durch an dem Sitzbezug fixierte Lichtleitfaserbündel hervorgerufen werden. Das Ende des Lichtleitfaserbündels ist mit einem Gehäuse einer Lichtquelle verbunden, wobei das emittierte Licht in das Lichtleitfaserbündel geleitet wird. Das Gehäuse der Lichtquelle ist lose hängend - also in alle Richtungen frei beweglich.

Die Druckschrift EP 1 903 359 A2 beschreibt einen Beleuchtungskörper umfassend eine Lichtquelle, die Licht in eine Lichtführung einspeist, welche auch ein "Einkoppelemelement" darstellen könnte. Die Lichtführung und die Abzieh-, Diffusor-, und Zentralblätter werden durch eine seitliche Abstützvorrichtung festgehalten.

Die Druckschrift DE 10 2005 013 837 A1 beschreibt eine Innenraumleuchte für ein Automobil, umfassend eine primäre und eine sekundäre Lichtabgabeeinheit in einem Gehäuse. Die sekundäre Lichtabgabeeinheit besteht unter anderem dabei aus einem durch Lichtleiterkörperhaltenuten gehaltenen Lichtleiterkörper und Lichtabgabeelemente. Die Lichtabgabelemente sind jedoch nicht mit dem Lichtleiterkörper verbunden. Zwischen den Lichtabgabeelementen und dem Lichtleiterkörper ist ein Gehäuse angeordnet.

Die Druckschrift US 5,590,945 bescheibt ein Display, bei dem eine LED Licht in einen Lichtleiter einspeist. Die LED liegt dabei in einer Aussparung des Lichtleiterendes, welches parabolische Seitenwndungen hat, die das Streulicht der LED reflektieren

Es ist Aufgabe der vorliegenden Erfindung, eine Beleuchtungsvorrichtung bereitzustellen, mittels welcher entlang einer Kontur eines großflächigen Funktionselements ein gleichmäßig heller Leuchtstreifen erzeugbar ist. Insbesondere soll auch bei einem Kraftwagen ein Leuchtstreifen der genannten Art erzeugbar sein.

Die Aufgabe wird durch eine Beleuchtungsvorrichtung gemäß Anspruch 1 sowie durch einen Kraftwagen gemäß Anspruch 10 gelöst. Vorteilhafte Weiterbildungen der erfindungsgemäßen Beleuchtungsvorrichtung und des erfindungsgemäßen Kraftwagens sind durch die Unteransprüche gegeben.

Mittels der erfindungsgemäßen Beleuchtungsvorrichtung lässt sich an einem Bauteil (z.B. einem Rahmen für eine Schiebedachöffnung) ein Leuchtstreifen entlang einer vorgegebenen Strecke erzeugen. Dazu weist die Beleuchtungsvorrichtung einen länglich geformten Lichtleiter zum Verteilen von Licht entlang der Strecke und ein mit dem Lichtleiter verbundene Lichtquelle in Form eines Einkoppelelements zum Erzeugen des Lichts und zum Einkoppeln desselben in den Lichtleiter auf. Ein Bereich des Lichtleiters ist mittels einer Festlagereinrichtung bezüglich des Bauteils ortsfest gelagert. Es kann dazu unmittelbar an dem Bauteil selbst oder aber z.B. an einem anderen Teil befestigt sein, mit dem auch das Bauteil selbst mechanisch starr gekoppelt ist.

Das Einkoppelelement ist dagegen mittels einer Loslagereinrichtung bezüglich des Bauteils entlang zumindest einer Richtung beweglich gelagert. Die erfindungsgemäße Beleuchtungsvorrichtung weist den Vorteil auf, dass das Einkoppelelement bei einer thermisch bedingten Längenänderung des Lichtleiters von diesem verschoben werden kann. Anders als bei einem ortsfest gelagerten Einkoppelelement wird so durch die Längenänderung keine zusätzliche Druck- oder Zugkraft auf den Lichtleiter ausgeübt, durch welche dieser beschädigt werden könnte. Die Festlagereinrichtung für den Lichtleiter gewährleistet hingegen, dass sich der Lichtleiter nicht während mehrerer (thermisch bedingter) Ausdehnungs- und Schrumpfungsvorgänge insgesamt bezüglich des Bauteils verschiebt.

Die erfindungsgemäße Beleuchtungsvorrichtung sieht dabei vor, dass die Loslagereinrichtung ein bezüglich des Bauteils ortsfest gelagertes Trägerteil aufweist und die Einkoppeleinrichtung mit einem Schlitten der Loslagereinrichtung verbunden ist, welcher entlang einer Gleitrichtung bezüglich des Trägerteils verschiebbar ist. Hierdurch ergibt sich der Vorteil, dass sich auch ein in seiner Form in keiner besonderen Weise angepasstes, handelsübliches Einkoppelelement bewegbar lagern lässt.

Eine andere Ausführungsform sieht vor, dass die Loslagereinrichtung wenigstens eine bezüglich des Bauteils ortsfest gelagerte Fassungseinrichtung aufweist, welche die Einkoppeleinrichtung in einer Ebene senkrecht zur Längserstreckungsrichtung des Lichtleiters zumindest teilweise, bevorzugt vollständig, umgibt. Bei einer Rüttelbewegung der Beleuchtungsvorrichtung, wie sie beispielsweise in einen Kraftwagen während einer Fahrt über eine holprige Straße verursacht werden kann, ist dann in vorteilhafter Weise verhindert, dass die Einkoppeleinrichtung an dem Lichtleiter hin- und herfedert.

Gemäß einer anderen Ausführungsform der erfindungsgemäßen Beleuchtungsvorrichtung ist ein Gleitweg des Einkoppelelements in der Loslagereinrichtung in eine Gleitrichtung durch ein Anschlagelement begrenzt, das beweglich gelagert ist. Dann lässt sich das Einkoppelelement bei einer Herstellung oder Reparatur der Beleuchtungsvorrichtung einfach in die Loslagereinrichtung hineindrücken. Die Montage bzw. die Reparatur werden wir hierdurch in vorteilhafter Weise vereinfacht. Das Anschlagelement ist bevorzugt federnd gelagert.

Die beiden letztgenannten Ausführungsformen (mit Fassungseinrichtung und beweglichem Anschlagelement) lassen sich besonders einfach in Kombination verwirklichen, wenn das Einkoppelelement in der Loslagereinrichtung durch eine Schnappverbindung gehalten ist.

Bei einer weiteren Ausführungsform der erfindungsgemäßen Beleuchtungsvorrichtung ist der Lichtleiter zumindest bereichsweise von einem transparenten Streukörper umgeben. Der Lichtleiter ist hierbei zumindest bereichsweise entlang seiner Längserstreckung bezüglich des Streukörpers verschiebbar gelagert. Die Wände des Lichtleiters können also in Verlaufsrichtung der Strecke an einer Innenwandung des Streukörpers entlang gleiten. Der Streukörper ermöglicht es in vorteilhafter Weise, eine nach außen hin sichtbare, geschlossene Oberfläche bereitzustellen, die sich entlang einer Kontur des Bauteils erstreckt und die mittels des Lichtleiters gleichmäßig hell von Innen erleuchtet wird. Der Streukörper ist dabei bevorzugt aus einem Material gefertigt, das im Verhältnis zu dem Material des Lichtleiters einen kleineren Wärmedehnungskoeffizienten aufweist. So kann sichergestellt werden, dass Spaltmaße zwischen dem Streukörper und umgebenden Bauteilen einen vorgebbaren Betrag nicht überschreiten. Die oftmals mit einem verringerten Wärmedehnungskoeffizienten einhergehende geringere Lichtleitfähigkeit des Materials des Streukörpers spielt hierbei keine wesentliche Rolle, da die Lichtleitung von dem Lichteinkoppelelement zu den einzelnen Lichtaustrittsstellen größtenteils über den Lichtleiter erfolgt. Dieser kann sich in dem Streukörper aufgrund der beschriebenen Lagerung frei ausdehnen.

Für den Fall, dass mittels der erfindungsgemäßen Beleuchtungsrichtung ein Leuchtstreifen entlang einer gekrümmten Strecke erzeugt werden soll, weist natürlich auch der Lichtleiter einen entsprechend gekrümmten Verlauf auf. Hierbei wird dann zwischen einem Richtungsvektor der Längserstreckung des Lichtleiters am Einkoppelelement einerseits und einem Richtungsvektor Längserstreckung des Lichtleiters an der Festlagereinrichtung andererseits ein Winkel eingeschlossen. Dieser ist betragsmäßig bevorzugt kleiner als 40°, insbesondere kleiner als 30°. Dies verhindert, dass sich der Lichtleiter bei eine Erwärmung verbiegt, während er die Einkoppeleinrichtung verschiebt. Soll ein Leuchtstreifen entlang einer Strecke erzeugt werden, die einen Verlauft des Lichtleiters mit einer stärkeren Krümmung erfordert, ist es vorteilhaft, mehrere der erfindungsgemäßen Beleuchtungsvorrichtungen entlang dieser Strecke anzuordnen.

Während des Verschiebens des Einkoppelelements aufgrund einer Längenänderung des Lichtleiters kann von einem Teil der Loslagereinrichtung, welches bezüglich des Bauteils ortsfest gelagert ist, eine Führungskraft auf das Einkoppelelement wirken. Gemäß einer vorteilhaften Ausführungsform der erfindungsgemäßen Beleuchtungsvorrichtung wird diese Führungskraft über zwei unterschiedliche Wege übertragen, so dass über zwei Übertragungsbereiche jeweils ein Teil der gesamten Führungskraft zum Einkoppelelement hin übertragen wird. Die Lage der Übertragungsbereiche ist dabei derart gewählt, dass die Beträge der beiden (Teil-)Führungskräfte gleich sind. So kann vermieden werden, dass die Einkoppeleinrichtung während des Bewegt-werdens in der Loslagereinrichtung verkanntet und dann eine weitere Bewegung blockiert wird.

Zum Erzeugen des Lichts weist das Einkoppelelement bevorzugt wenigstens eine Leuchtdiode auf. Diese erwärmen sich im Betrieb nur geringfügig, so dass sie keine signifikante thermisch bedingte Verformung von Komponenten des Einkoppelelements verursachen.

Bevorzugt ist bei der erfindungsgemäßen Beleuchtungsvorrichtung noch ein weiteres Einkoppelelement mit dem Lichtleiter verbunden. Auch dieses Einkoppelelement ist dann mittels einer weiteren Loslagereinrichtung bezüglich des Bauteils entlang zumindest einer Richtung bewegbar gelagert. Durch Einspeisen von Licht an zwei unterschiedlichen Stellen des Lichtleiters lässt sich auf besonders einfache Weise ein gleichmäßig heller Leuchtstreifen erzeugen.

Ein weiterer Aspekt der Erfindung betrifft einen Kraftwagen, der wenigstens eine Beleuchtungsvorrichtung aufweist, die einer Ausführungsform der erfindungsgemäßen Beleuchtungsvorrichtung entspricht. Dieser Kraftwagen weist den Vorteil auf, dass auch Konturen großer Funktionselemente, wie z.B. ein Bedienfeld eines Armaturenbretts, ein Handschuhfach oder ein Handgriff für eine Tür, mittels eines gleichmäßig hellen Leuchtstreifens im Dunkeln erkennbar gemacht werden können. Die Beleuchtungsvorrichtung kann dabei großen Temperaturschwankungen ausgesetzt werden, ohne dass die Lichtleiter hierdurch beschädigt werden oder sich die Beleuchtungsvorrichtung derart verformt, dass ein Spalt zwischen der Beleuchtungsvorrichtung und einem Bauteil, von welchem sie eingefasst ist, entsteht.

Insbesondere kann bei dem erfindungsgemäßen Kraftwagen von der wenigstens einen Beleuchtungsvorrichtung ein Funktionselement des Kraftwagens umgeben sein und hierdurch ein um das Funktionselement umlaufender Leuchtstreifen erzeugbar sein. Dann ist im Dunkeln die gesamte Kontur des Funktionselements erkennbar.

Bevorzugt wird so eine verschließbare Öffnung umgeben. Beispielsweise kann dann ein Türrahmen illuminiert werden, wodurch vermieden werden kann, dass ein Passagier sich beim Ein- oder Aussteigen den Kopf stößt.

Bevorzugt ist die wenigstens eine Beleuchtungsvorrichtung in einem Rahmen für ein Dachöffnung eines Schiebedachs angeordnet. Dann kann der Innenraum des Kraftwagens diffus beleuchtet werden.

Für den Fall, dass die Strecke, entlang welcher mittels der wenigstens einen Beleuchtungsvorrichtung ein Leuchtstreifen erzeugbar ist, wenigstens einen geradlinigen Abschnitt aufweist, ergibt sich ein Vorteil, wenn die Festlagereinrichtung wenigstens einer Beleuchtungsvorrichtung in dem geradlinigen Abschnitt angeordnet ist. Dann kann sich der Lichtleiter, der durch diese Festlagereinrichtung gehalten ist, von der Festlagereinrichtung aus entlang des geradlinigen Abschnitts ausdehnen. Hierbei wirkt dann nur eine verhältnismäßig geringe Reibungskraft von angrenzenden Bauteilen, wie z.B. einem Streukörper, auf den Lichtleiter. Entsprechend gering ist dann die Gefahr, dass eine mechanische Spannung in dem Lichtleiter auftritt.

Bei dem erfindungsgemäßen Kraftwagen kann eine gleichmäßig helle Beleuchtung entlang einer eckigen Kontur besonders einfach bereitgestellt werden, indem in einem Eckbereich wenigstens ein Einkoppelelement angeordnet ist. Nahe des Einkoppelelements ist es nämlich möglicht, den Lichtleiter gekrümmt auszugestalten und so den Eckbereich gleichmäßig hell auszuleuchten. Eine thermisch bedingte relative Längenänderung des Lichtleiters zwischen dem gekrümmten Bereich des Lichtleiters nahe der Einkoppeleinrichtung und der Einkoppeleinrichtung selbst ist dann so gering, dass der Lichtleiter in diesem Abschnitt nicht beschädigt wird.

Die Erfindung wird im Folgenden anhand von Ausführungsbeispielen näher erläutert. Das zeigt:
- Fig. 1: eine schematische Darstellung einer Beleuchtungsvorrichtung für ein Schiebedach eines Personenkraftwagens, der eine Ausführungsform des erfindungsgemäßen Kraftwagens darstellt,
- Fig. 2: eine schematische Darstellung einer perspektivischen Ansicht einer Beleuchtungsvorrichtung für ein Schiebedach eines weiteren Personenkraftwagens, der eine andere Ausführungsform des erfindungsgemäßen Kraftwagens darstellt, und
- Fig. 3: eine schematische Darstellung einer Seitenansicht eines Einkoppelelements der Beleuchtungsvorrichtung von Fig. 2.

Die Beispiele stellen bevorzugte Ausführungsformen der Erfindung dar.

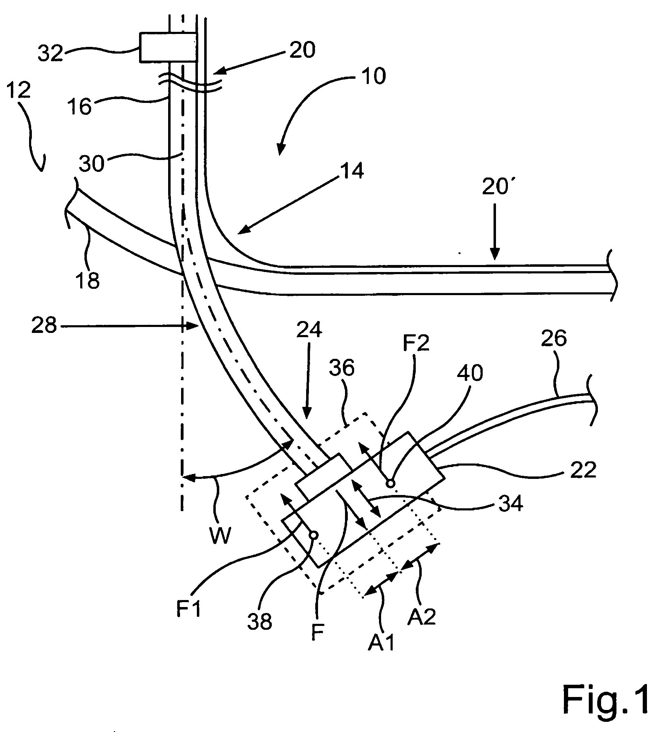

In dem der Fig. 1 zugrunde liegenden Beispiel befindet sich in einem Personenkraftwagen um eine Schiebedachöffnung 10 an einem Dach 12 des Personenkraftwagens ein (nicht dargestellter) Rahmen. Aus einer Leuchtvorrichtung der Rahmens, die einen streifenförmigen Lichtaustritt aufweist, der die Schiebedachöffnung 10 umgibt, gelangt Licht der Leuchtvorrichtung in einen Innenraum des Kraftwagens. Die Schiebedachöffnung 10 ist hierdurch von einem gleichmäßig hell leuchtenden, geschlossenen Band oder Streifen umgeben ist. Fig. 1 zeigt ein abgerundete Ecke 14 eines Rands der Schiebedachöffnung 10, wie sie vom Inneren des Personenkraftwagens aus mit Blickrichtung nach oben, d.h. in Fahrzeughochrichtung, zu sehen ist. Von dem Rahmen ist in Fig. 1 ist das Innere gezeigt.

Zum Erzeugen des Leuchtstreifens befinden sich in dem Rahmen insgesamt vier Lichtleiter der Leuchtvorrichtung, von denen in Fig. 1 Teile eines Lichtleiters 16 und eines Lichtleiters 18 gezeigt sind. Die Schiebedachöffnung 10 ist im wesentlichen rechteckig. Jeder der Lichtleiter ist entlang eines geradlinigen Kante der Schiebedachöffnung 10 verlegt. In Fig. 1 sind Ränder 20 und 20' des Dachs 12 gezeigt, welche die jeweils eine der Kanten bilden.

Die Lichtleiter sind aus einem transparenten Material gefertigt. Bei dem Material kann es sich z.B. um Polymethylmethacrylat (PMMA) oder um ein Polycarbonat (PC) handeln. In jeden der Lichtleiter wird an zwei Enden Licht eingespeist, das sich in dem jeweiligen Lichtleiter in Verlaufsrichtung des Rands 20, 20' ausbreitet. Durch Streuzentren der Lichtleiter werden Teiles des Lichts aus den Lichtleitern herausgelenkt und entlang des Rands 20, 20' in einen transparenten Streukörper eingekoppelt, in welchen die Lichtleiter eingeklipst sind. Durch den Streukörper wird das ausgetretene Licht in Richtung auf den Rand 20, 20' umgelenkt, wo es aus dem Streukörper austritt und in den Innenraum gelangt. Durch das Licht des Lichtleiters 16 ist so der Leuchtstreifen an dem Rand 20 gebildet. Der Streukörper ist fest mit dem Dach 12 verbunden.

In Fig. 1 ist von den Einkoppelelementen der Leuchtvorrichtung der Übersichtlichkeit halber eines gezeigt, das hier als Einspeiseeinheit 22 bezeichnet ist. Die Einspeiseeinheit 22 ist das auf einen Endbereich 24 des Lichtleiters 16 aufgesteckt. In der Einspeiseeinheit 22 befinden sich eine Leuchtdiode und eine zugehörige elektrische Schaltung, über welche die Leuchtdiode mit elektrischer Energie aus einem elektrischen Bordnetz des Personenkraftwagens versorgt wird. Die Schaltung ist dazu über ein flexibles Kabel 26 an das Bordnetz angeschlossen. Das Licht der Leuchtdiode wird innerhalb eines lichtdichten Gehäuses 28 der Einspeiseeinheit 22 gebündelt und in den Lichtleiter 16 eingekoppelt. Die übrigen Einkoppelelemente sind in derselben Weise aufgebaut wie die Einspeiseeinheit 22. Ein Abstand der Einspeiseeinheit 22 von der Ecke 14 ist kleiner als zehn Prozent der Länge des geradlinigen Rands 20. Mit anderen Worten ist die Einspeiseeinheit 22 in einem Eckbereich des Rands der Schiebedachöffnung 10 angeordnet. Die übrigen Einkoppelelemente sind ebenfalls in jeweiligen Eckbereichen des Rands der Schiebedachöffnung 10 angeordnet.

Der Lichtleiter 16 ist länglich geformt. In dem gezeigten Beispiel besteht der Lichtleiter 16 aus einem Stab, der z.B. mittels eines Spritzgussverfahrens hergestellt worden sein kann. Im Eckbereich weist der Lichtleiter 16 eine Krümmung 28 auf. Auch der Lichtleiter 18 ist in dem Eckbereich gekrümmt. Ein Abstand des Lichtleiters 16 von der Ecke 14 und ein entsprechender Abstand des Lichtleiters 18 von der Ecke 14 sind wegen der Krümmungen so gering, dass der Leuchtstreifen auch in der Ecke 14 für eine Person, die sich in dem Innenraum befindet, genauso hell erschient, wie entlang der geradlinigen Ränder 20 und 20'.

Ein Wärmekoeffizient des Lichtleiters 16 ist so groß, dass sich eine Länge des Lichtleiters 16 aufgrund einer Erwärmung bzw. Abkühlung (wie sie bei dem Personenkraftwagen z.B. im Sommer bzw. Winter vorkommen kann) entlang einer Längsachse 30 des Lichtleiters 16 um insgesamt mehr als 5 mm verändern kann. In dem Streukörper ist der Lichtleiter 16 in Richtung seiner Länge, d.h. in Verlaufsrichtung der Längsachse 30, nur an einer Stelle mit einer Fixiereinrichtung 32 in dem Streukörper fixiert. Die Fixiereinrichtung 32 befindet sich hier in einem mittleren Fünftel des geradlinigen Rands 20. Durch die Befestigungseinrichtung 32 kann der Lichtleiter 16 beispielsweise mittels einer stoffschlüssigen Verbindung (Verklebung) oder eine formschlüssige Verbindung gehalten sein. In dem verbleibenden Teil des Streukörpers, d.h. in einem Abstand zur Befestigungseinrichtung 32 kann der Lichtleiter 16 entlang seiner Längsachse 30 in dem Streukörper entlang gleiten.

Wenn sich der Lichtleiter 16 aufgrund einer Erwärmung ausdehnt und sich dadurch entlang der Längsachse 30 verlängert, übt sein Endbereich 24 eine Kraft F auf die Einspeiseeinheit 22 aus. Die Einspeiseeinheit 22 bewegt sich hierdurch in Richtung eines Gleitwegs 34. Sie ist dazu auf einem Schlitten 36 befestigt, der bezüglich des Dachs 12 schwimmend gelagert ist. Die Einspeiseeinheit 22 kann beispielsweise auf den Schlitten 36 aufgeklebt sein oder in diesen eingeklipst sein.

Der Schlitten 36 ist hier auf zwei (nicht dargestellte) Schienen aufgeschoben, die fest mit dem Dach 12 verbunden sind. Während einer Bewegung des Schlittens 36 üben die beiden Schienen eine Führungskraft F1 bzw. F2 auf den Schlitten aus. Die Einspeiseeinheit 22, der Schlitten 36 und die Schienen sind dabei so zueinander angeordnet, dass sich Beträge der Führungskräfte F1, F2 ergeben, die ähnlich groß sind. Hierdurch verkantet der Schlitten 36 nicht auf den Schienen. Um ähnlich große Führungskräfte F1, F2 zu erhalten, ist die Einspeiseeinheit 22 so auf dem Schlitten 36 befestigt, dass Abstände A1, A2 gleich sind, welche effektive Angriffspunkte 38, 40 der Führungskräfte F1, F2 an dem Schlitten 36 zu der Längsachse 30 des Lichtleiters 16 im Endbereich 24 aufweisen.

Auch bei einer sehr hohen Temperatur, z.B. bei 70°C, wenn der Lichtleiter 16 nahezu seine maximal vorgesehene Ausdehnung erreicht hat, wirkt die Kraft F stets entlang des Gleitwegs 34. Dazu ist die Krümmung 28 so gewählt, dass ein Winkel W, der sich zwischen einer Verlaufsrichtung der Längsachse 30 an der Fixiereinrichtung 32 und einer Verlaufsrichtung der Längsachse 30 im Endbereich 24 ergibt, kleiner als 40° ist. Der Winkel ist bevorzugt nicht größer als 30°.

Bei dem Lichtleiter 16 befindet sich an seinem anderen Ende ebenfalls ein Einkoppelelement, das in der gleichen Weise bezüglich des Daches 12 gelagert ist wie die Einspeiseeinheit 22. Auch die übrigen Lichtleiter der Leuchtvorrichtung des Personenkraftwagens werden mit Licht aus jeweils zwei schwimmend gelagerten Einkoppelelementen gespeist. Die übrigen Lichtleiter sind dabei ebenfalls in jeweiligen Mittenbereichen der gradlinigen Ränder des Schiebedachöffnung 10 bezüglich des Dachs 12 fixiert.

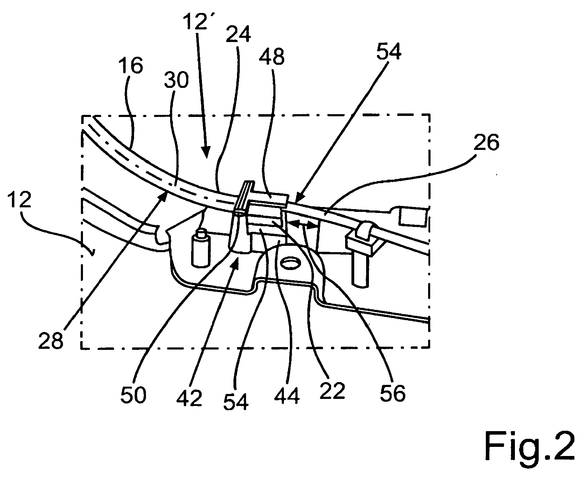

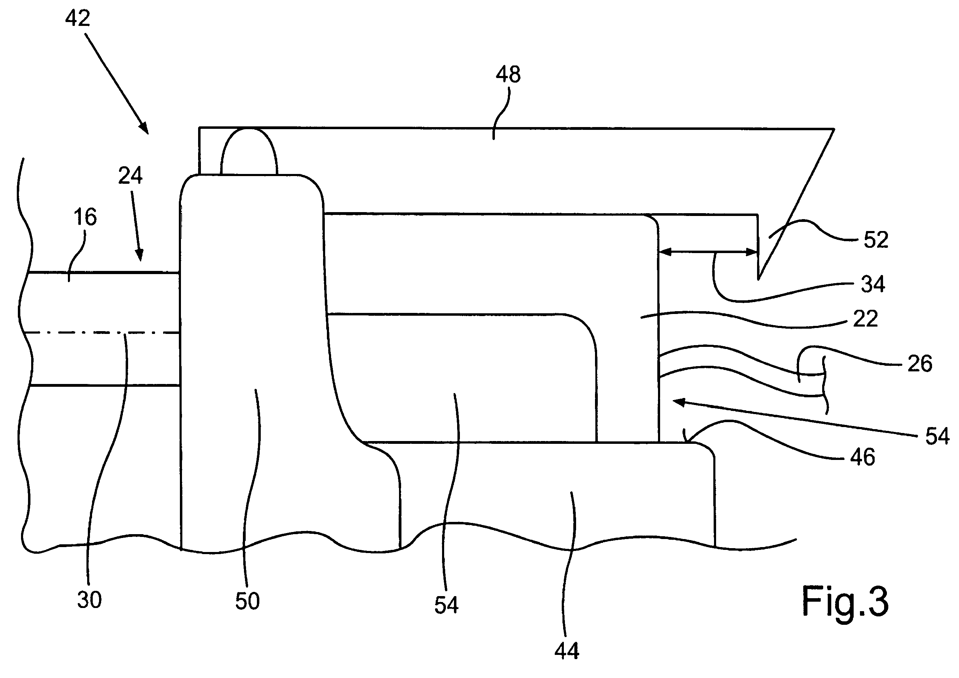

Anhand von Fig. 2 und Fig. 3 ist im Folgenden in einem Vergleichsbeispiel eine weitere Loslagereinrichtung 42 für eine Einspeiseeinheit 22 beschrieben. Die Loslagereinrichtung kann z.B. anstelle des Schlittens 36 in einem Personenkraftwagen eingebaut sein. Zur besseren Orientierung sind in Fig. 2 und Fig. 3 Elemente, welche in ihrer Funktionsweise Elementen von Fig. 1 entsprechen, mit denselben Bezugszeichen versehen wie in Fig. 1.

Die Loslagereinrichtung 42 ist fest mit einem Trägerteil 12' verbunden, welches an dem Dach 12 des Personenkraftwagens befestigt ist. Die Loslagereinrichtung 42 kann beispielsweise mit dem Trägerteil 12' durch Anspritzen in einen Spritzgussverfahren verbunden worden sein.

Die Loslagereinrichtung 42 umfasst einen Block 44 mit einer ebenen Oberfläche 46, auf welcher die Einspeiseeinheit 22 durch eine Schnappverbindung gehalten ist. Die Schnappverbindung ist durch einen flexiblen Kunststoffarm 48 ermöglicht, welcher an einem Rahmen 50 der Lagereinrichtung 42 ausgebildet ist.

Auf der Oberfläche 46 kann die Einspeiseeinheit 22 entlang eines Gleitenswegs 34 gleiten. Ein Fortsatz 52 des Kunststoffarms 48 bildet ein federnd gelagertes Anschlagelement, durch welches der Gleitweg 34 entlang einer der beiden möglichen Gleitrichtungen 56 begrenzt ist. Die Einspeiseeinheit 22 kann sich auf der Oberfläche 46 nur entlang einer Verlaufsrichtung einer Längsachse 30 eines Endbereichs 24 eines Lichtleiters 16 bewegen. Der Endbereich 24 des Lichtleiters 16 ist mit der Einspeiseeinheit 22 verbunden.

Senkrecht zu den beiden ausschließlich möglichen Gleiterrichtungen 56 ist eine Bewegung der Einspeiseeinheit 22 zum einen durch die Oberfläche 46 und den Kunststoffarm 48 und zum anderen (senkrecht dazu) durch den Rahmen 50 und durch Seitenwände 54 begrenzt. In Fig. 2 und Fig. 3 ist von den Seitenwänden 54 nur eine dargestellt. Die andere Seitenwand 54 wird in den Darstellungen von Fig. 2 und Fig. 3 durch die Einspeiseeinheit 22 verdeckt. Insgesamt ist eine transversale Bewegung der Einspeiseeinheit 22 in einer Ebene senkrecht zur Längsachse 30 blockiert. Mit einer zur Längsachse 30 senkrechten Ebene ist hierbei eine Ebene gemeint, deren Normalenvektor parallel zu einem Richtungsvektor der Längsachse 30 im Endbereich 24 angeordnet ist.

Die Einspeiseeinheit 22 ist in der Loslagereinrichtung 42 durch den Rahmen 50 bezüglich des Lichtleiters 16 auch drehfest gelagert, das heißt die Einspeiseeinheit 22 kann sich nicht um die Längsachse 30 des Lichtleiter 16 drehen.

Insgesamt verändert sich damit eine relative Lage des Endbereich 24 des Lichtleiter 16 einerseits und der Einspeiseeinheit 22 andererseits auch bei einer Bewegung der Einspeiseeinheit 22 nicht. So tritt bei einem Betrieb der Einspeiseeinheit 22 stets ein gleich bleibender Lichtstrom in den Lichtleiter 16 ein.

Bei einer Bewegung der Einspeiseeinheit 22 entlang des Gleitwegs 34 wirken Führungskräfte auf die Einspeiseeinheit 22, die symmetrisch bezüglich Längsachse 30 sind. Dadurch verkanntet sich die Einspeiseeinheit 22 nicht in der Loslagereinrichtung 42.

Die durch den Kunststoffarm 48 gebildete Schnappverbindung ermöglicht es, bei einem Defekt der Einspeiseeinheit 22 diese auf einfache Weise aus der Loslagereinrichtung 42 zu entfernen und durch ein neues Einkoppelelement zu ersetzen.

Durch die Beispiele gezeigt, wie eine Beleuchtung mit Fest- und Loslageranordnung eine Ausdehnung bei Temperaturschwankungen ermöglicht. Bei einer Anwendung mit direkter Beleuchtung, d.h. einer solchen, die von einer Person in dem Personenkraftwagen gesehen werden kann, wird der Lichtleiter längs verschiebbar in einer Streuscheibe mit geringerem Wärmeausdehnungskoeffizienten geführt. Die Lichtquellen, d.h. die Einkoppelelemente, müssen dadurch in einigen Fällen schwimmend gelagert werden. Dazu wird das Einkoppelelement samt Leuchtdioden schwimmend auf einem Trägerbauteil aufgenommen. Zwei technische Umsetzungsmöglichkeiten sind hier beschrieben: Entweder wird das Standard-Einkoppelelement mit Leuchtdioden von einem Schlitten aufgenommen, der eine schwimmende Lagerung in einem Trägerbauteil besitzt, oder das Trägerbauteil hat eine verrastende Aufnahme für das Einkoppelelement mit ausreichend Spiel.

Die beschriebenen Leuchtvorrichtungen ermöglichen es, eine umlaufende Beleuchtung eines großflächigen Bauteil ohne sichtbare Unterbrechung entlang einer Oberfläche zu erzeugen, aus welcher das Licht austritt.

## Patentansprüche

1. Beleuchtungsvorrichtung zum Erzeugen eines Leuchtstreifens entlang einer vorgegebenen Strecke (14, 20, 20') an einem Bauteil (12), wobei die Beleuchtungsvorrichtung für einen Innenraum eines Kraftfahrzeugs geeignet ist, umfassend:
- einen länglich geformten Lichtleiter (16, 18) zum Verteilen von Licht entlang der Strecke (14, 20, 20'),
- eine mit dem Lichtleiter verbundene Lichtquelle in Form eines Einkoppelelements (22) zum Erzeugen des Lichts und zum Einkoppeln desselben in den Lichtleiter (16, 18),
- eine Festlagereinrichtung (32), mittels welcher ein Bereich des Lichtleiters (16, 18) bezüglich des Bauteils (12) ortsfest gelagert ist, und
- eine Loslagereinrichtung (42), mittels welcher das Einkoppelelement (22) bezüglich des Bauteils (12) entlang zumindest einer Richtung (34, 56) bewegbar gelagert ist,
**dadurch gekennzeichnet dass**
die Loslagereinrichtung (42) ein bezüglich des Bauteils (12) ortsfest gelagertes Trägerteil aufweist und die Einkoppeleinrichtung (22) mit einem Schlitten (36) der Loslagereinrichtung (42) verbunden ist, welcher entlang einer Gleitrichtung (34) bezüglich des Trägerteils verschiebbar ist.

2. Beleuchtungsvorrichtung nach Anspruch 1,
**dadurch gekennzeichnet, dass**
die Loslagereinrichtung (42) wenigstens eine bezüglich des Bauteils (12) ortsfest gelagerte Fassungseinrichtung (44, 48, 50, 54) aufweist, welche die Einkoppeleinrichtung (22) in einer Ebene senkrecht zu einer Längserstreckungsrichtung (30) des Lichtleiters zumindest teilweise (44, 48, 54), bevorzugt vollständig (50), umgibt.

3. Beleuchtungsvorrichtung nach einem der vorhergehenden Ansprüche,
**dadurch gekennzeichnet, dass**
ein Gleitweg (34) des Einkoppelelements (22) in der Loslagereinrichtung (42) in eine Gleitrichtung (56) durch ein Anschlagelement (52) begrenzt ist, das beweglich, bevorzugt federnd, gelagert ist.

4. Beleuchtungsvorrichtung nach einem der vorhergehenden Ansprüche, **dadurch gekennzeichnet, dass**
das Einkoppelelement (22) in der Loslagereinrichtung (42) durch eine Schnappverbindung (48) gehalten ist.

5. Beleuchtungsvorrichtung nach einem der vorhergehenden Ansprüche,
**dadurch gekennzeichnet, dass**
der Lichtleiter (16, 18) zumindest bereichsweise von einem transparenten Streukörper umgeben ist und der Lichtleiter (16, 18) hierbei zumindest bereichsweise entlang seiner Längserstreckung (30) bezüglich des Streukörpers verschiebbar gelagert ist.

6. Beleuchtungsvorrichtung nach einem der vorhergehenden Ansprüche,
**dadurch gekennzeichnet, dass**
aufgrund eines gekrümmten Verlaufs (28) des Lichtleiters (16, 18) ein Winkel (W), welcher zwischen einerseits einem Richtungsvektor, welcher eine Richtung der Längserstreckung (30) des Lichtleiters (24) am Einkoppelelement (42) angibt, und andererseits einem Richtungsvektor, welcher eine Richtung der Längserstreckung (30) des Lichtleiters (16, 18) an der Festlagereinrichtung (32) angibt, eingeschlossen ist, betragsmäßig kleiner als 40°, bevorzugt kleiner als 30°, ist.

7. Beleuchtungsvorrichtung nach einem der vorhergehenden Ansprüche,
**dadurch gekennzeichnet, dass**
bei der Loslagereinrichtung (42) bei einer durch eine Längenänderung des Lichtleiters (16, 18) bewirkte Bewegung des Einkoppelelements (22) entlang eines bezüglich des Bauteils (12) ortsfestgelagerten Teils (44) der Loslagereinrichtung (42) über zwei Übertragungsbereiche (38, 40) jeweils eine Führungskraft (F1, F2) zum Einkoppelelement (22) hin übertragbar ist und die Beträge der beiden Führungskräfte (F1, F2) gleich sind, indem die Lage der Übertragungsbereiche entsprechend gewählt wird.

8. Beleuchtungsvorrichtung nach einem der vorhergehenden Ansprüche,
**dadurch gekennzeichnet, dass**
ein weiteres Einkoppelelement mit dem Lichtleiter (16, 18) verbunden ist, welches mittels einer weiteren Loslagereinrichtung bezüglich des Bauteils (12) entlang zumindest einer Richtung bewegbar gelagert ist.

9. Kraftwagen, welcher wenigstens eine Beleuchtungsvorrichtung gemäß einem der vorhergehenden Ansprüche aufweist.

10. Kraftwagen nach Anspruch 9,
**dadurch gekennzeichnet, dass**
von der wenigstens einen Beleuchtungsvorrichtung ein Funktionselement (10) des Kraftwagens umgeben ist und hierdurch ein das Funktionselement (10) umgebender Leuchtstreifen erzeugbar ist.

11. Kraftwagen nach Anspruch 9 oder 10,
**dadurch gekennzeichnet, dass**
die wenigstens eine Beleuchtungsvorrichtung in einem Rahmen für eine Dachöffnung (10) eines Schiebedachs angeordnet ist.

12. Kraftwagen nach einem der Ansprüche 9 bis 11,
**dadurch gekennzeichnet, dass**
die Strecke (14, 20, 20'), entlang welcher mittels der wenigstens einen Beleuchtungsvorrichtung ein Leuchtstreifen erzeugbar ist, wenigstens einen geradlinigen Abschnitt (20, 20') aufweist und in dem geradlinigen Abschnitt (20, 20') eine Festlagereinrichtung (32) angeordnet ist.

13. Kraftwagen nach einem der Ansprüche 9 bis 12,
**dadurch gekennzeichnet, dass**
die Strecke (14, 20, 20'), entlang welcher mittels der wenigstens einen Beleuchtungsvorrichtung ein Leuchtstreifen erzeugbar ist, wenigstens einen Eckbereich (14) aufweist und in dem Eckbereich (14) wenigstens ein Einkoppelelement (22) angeordnet ist.

## Claims

1. Lighting device for producing a light strip along a predetermined section (14, 20, 20') on a component (12) wherein the lighting device is suitable for the interior of a motor vehicle, comprising
- a longitudinally formed light guide (16, 18) for distributing light along the section (14, 20, 20'),
- connected to the light guide a light source in the form of a coupling-in element (22) for producing the light and for coupling it into the light guide (16, 18),
- a fixed bearing device (32) by means of which an area of the light guide (16, 18) is fixed in place with regard to the component (12), and
- a movable bearing device (42) by means of which the coupling-in element (22) can be supported in a moveable manner with regard to the component (12) in at least one direction (34, 56),
**characterised in that**
the movable bearing device (42) has a carrier section fixed in place with regard to the component (12) and the coupling-in device (22) is connected with a slide (36) of the movable bearing device (42) which can be moved with regard to the carrier section in one sliding direction (34).

2. Lighting device according to claim 1
**characterised in that**
the movable bearing device (42) has a least one holder device (44, 48, 50, 54) which is fixed in place with regard to the component (12) and which at least partially (44, 48, 54), preferably fully (50), surrounds the coupling-in device (22) in a plane perpendicular to a longitudinal direction (30) of the light guide.

3. Lighting device according to any one of the preceding claims
**characterised in that**
a slide path (34) of the coupling-in element (22) in the movable bearing device (42) is delimited in one sliding direction (56) by a stopper element (52) which is supported in a movable, preferably spring-loaded manner.

4. Lighting device according to any one of the preceding claims
**characterised in that**
the coupling-in element (22) is held in the movable bearing device (42) by a snap connection (48).

5. Lighting device according to any one of the preceding claims
**characterised in that**
the light guide (16, 18) is surrounded at least in parts by a transparent scattering body and the light guide (16, 18) is supported at least in sections along its longitudinal extent (30) in a movable manner with regard to the scattering body.

6. Lighting device according to any one of the preceding claims
**characterised in that**
due to a curvature (28) of the light guide (16, 18), an angle (W) which is enclosed between on the one hand a direction vector indicating a direction of the longitudinal extent (30) of the light guide (24) on the coupling-in element (42), and, on the other hand a direction vector indicating a direction of the longitudinal extent (30) of the light guide (16, 18) on the fixed bearing device (32), is less than 40°, preferably less than 30°.

7. Lighting device according to any one of the preceding claims
**characterised in that**
in the movable bearing device (42), in the event of a movement of the coupling-in element (22) along a fixed section (44) of the compnent (12) of the movable bearing device (42) brought about by a change in length of the light guide (16, 18), via each of two transmission areas (38, 40) a guiding force (F1, F2) can be transmitted to the coupling-in element (22) and the magnitudes of the guiding forces (F1, F2) are equal **in that** the position of the transmission area is selected accordingly.

8. Lighting device according to any one of the preceding claims
**characterised in that**
a further coupling-in element is connected to the light guide (16, 18) by means of which a further moveable bearing device is supported in a movable manner in at least one direction with regard to the component (12).

9. Motor vehicle comprising at least one lighting device according to any one of the preceding claims.

10. Motor vehicle according to claim 9
**characterised in that**
a functional element (10) of the motor vehicle is surrounded by the at least one lighting device and through this a light strip surrounding the functional element (10) can be produced.

11. Motor vehicle according to claim 9 or 10
**characterised in that**
the at least one lighting device is arranged in a frame for a roof opening (10) of a sunroof.

12. Motor vehicle according to any one of claims 9 to 11
**characterised in that**
the section (14, 20, 20') along which a light strip can be produced by means of the at least one lighting device, has at least one straight section (20, 20') and fixed bearing device (32) is arranged in the straight section (20, 20').

13. Motor vehicle according to any one of claims 9 to 12
**characterised in that**
the section (14, 20, 20') along which a light strip can be produced by means of the at least one lighting device, has at least one corner section (14) and at least one coupling-in element (22) is arranged in the corner area (14).

## Revendications

1. Dispositif d'éclairage pour produire une bande lumineuse le long d'une ligne prédéterminée (14, 20, 20') sur un élément (12), le dispositif d'éclairage convenant à un espace intérieur d'un véhicule automobile, comprenant :
- un guide de lumière (16, 18) de forme allongée pour répartir la lumière le long de la ligne (14, 20, 20'),
- une source lumineuse reliée au guide de lumière sous la forme d'un élément d'introduction (22) pour produire la lumière et pour introduire celle-ci dans le guide de lumière (16, 18),
- un dispositif de support fixe (32) au moyen duquel une zone du guide de lumière (16, 18) est logée de manière fixe par rapport à l'élément (12),
- un dispositif de support mobile (42) au moyen duquel l'élément d'introduction (22) est logé de manière mobile le long d'au moins une direction (34, 56) par rapport à l'élément (12),
**caractérisé en ce que** le dispositif de support mobile (42) comporte une partie porteuse logée de manière fixe par rapport à l'élément (12) et **en ce que** le dispositif d'introduction (22) est relié à un chariot (36) du dispositif de support mobile (42) qui est déplaçable par rapport à la partie porteuse le long d'une direction de glissement (34).

2. Dispositif d'éclairage selon la revendication 1, **caractérisé en ce que** le dispositif de support mobile (42) comporte au moins un dispositif de saisie (44, 48, 50, 54) qui est logé de manière fixe par rapport à l'élément (12) et qui entoure le dispositif d'introduction (22) dans un plan perpendiculairement à la direction longitudinale (30) du guide de lumière, et ce au moins partiellement (44, 48, 54) et de préférence complètement (50).

3. Dispositif d'éclairage selon l'une des revendications précédentes, **caractérisé en ce qu'**une course de glissement (34) de l'élément d'introduction (22) dans le dispositif de support mobile (42) est limitée dans une direction de glissement (56) par un élément de butée (52) qui est logé de manière mobile, de préférence de façon élastique.

4. Dispositif d'éclairage selon l'une des revendications précédentes, **caractérisé en ce que** l'élément d'introduction (22) est maintenu dans le dispositif de support mobile (42) par une liaison encliquetable (48).

5. Dispositif d'éclairage selon l'une des revendications précédentes, **caractérisé en ce que** le guide de lumière (16, 18) est entouré au moins par endroits d'un corps de diffusion transparent et **en ce que** le guide de lumière (16, 18) est logé ainsi au moins par endroits de manière déplaçable le long de sa direction longitudinale (30) par rapport au corps de diffusion.

6. Dispositif d'éclairage selon l'une des revendications précédentes, **caractérisé en ce que**, en raison de l'allure courbée (28) du guide de lumière (16, 18), un angle (W) qui est formé d'une part par un vecteur directionnel indiquant une direction de l'extension longitudinale (30) du guide de lumière (24) au niveau de l'élément d'introduction (42) et d'autre part par un vecteur directionnel indiquant une direction de l'extension longitudinale (30) du guide de lumière (16, 18) au niveau du dispositif de support fixe (32) a une valeur inférieure à 40°, de préférence inférieure à 30°.

7. Dispositif d'éclairage selon l'une des revendications précédentes, **caractérisé en ce que**, au niveau du dispositif de support mobile (42), lors d'un mouvement, provoqué par une modification de longueur du guide de lumière (16, 18), de l'élément d'introduction (22) le long d'une partie (44), logée de manière fixe par rapport à l'élément (12), du dispositif de support mobile (42), à chaque fois une force de guidage (F1, F2) peut être transmise à l'élément d'introduction (22) par l'intermédiaire de deux zones de transition (38, 40) et les valeurs des deux forces de guidage (F1, F2) sont identiques, la position des zones de transition étant choisie en conséquence.

8. Dispositif d'éclairage selon l'une des revendications précédentes, **caractérisé en ce qu'**un autre élément d'introduction est relié au guide de lumière (16, 18), lequel autre élément d'introduction est logé mobile par rapport à l'élément (12) le long d'au moins une direction au moyen d'un autre dispositif de support mobile.

9. Véhicule automobile, qui comporte au moins un dispositif d'éclairage selon l'une des revendications précédentes.

10. Véhicule automobile selon la revendication 9, **caractérisé en ce qu'**un élément fonctionnel (10) du véhicule automobile est entouré par l'au moins un dispositif d'éclairage et **en ce qu'**une bande lumineuse entourant l'élément fonctionnel (10) peut ainsi être produite.

11. Véhicule automobile selon la revendication 9 ou 10, **caractérisé en ce que** l'au moins un dispositif d'éclairage est agencé dans un cadre pour une ouverture de toit (10) d'un toit (10) coulissant.

12. Véhicule automobile selon l'une des revendications 9 à 11, **caractérisé en ce que** la ligne (14, 20, 20') le long de laquelle une bande lumineuse peut être produite au moyen de l'au moins un dispositif d'éclairage comporte au moins un tronçon rectiligne (20, 20') et **en ce qu'**un dispositif de support fixe (32) est agencé dans le tronçon rectiligne (20, 20').

13. Véhicule automobile selon l'une des revendications 9 à 12, **caractérisé en ce que** la ligne (14, 20, 20') le long de laquelle une bande lumineuse peut être produite au moyen de l'au moins un dispositif d'éclairage comporte au moins une zone d'angle (14) et **en ce qu'**au moins un élément d'introduction (22) est agencé dans la zone d'angle (14).
